# EUROPÄISCHE PATENTSCHRIFT

(11) **EP 1 014 066 B1**
(45) Veröffentlichungstag und Bekanntmachung des Hinweises auf die Patenterteilung: **20.03.2002**
(21) Anmeldenummer: 98124541.8
(22) Anmeldetag: 22.12.1998
(51) Int. Cl.: G01L 7/08, G01L 13/02, G01L 19/00

(54) **Differenzdruckmessgerät**
Differential Pressure Gauge
Manomètre différentiel

(43) Veröffentlichungstag der Anmeldung: 28.06.2000
(73) Patentinhaber: WIKA ALEXANDER WIEGAND GmbH & CO., D-63911 Klingenberg (DE)
(72) Erfinder: Zetl, Gerhard Dipl.-Ing., 63987 Miltenberg (DE)
(74) Vertreter: Kühn, Alexander

(56) Entgegenhaltungen:
- EP-A- 0 126 697
- DE-A- 3 224 122
- DE-U- 8 130 130
- FR-A- 2 323 993
- GB-A- 183 795
- GB-A- 1 391 417
- US-A- 3 136 130
- US-A- 4 030 365

## Beschreibung

Die vorliegende Erfindung betrifft ein Druckmeßgerät gemäß dem Oberbegriff des Patentanspruchs 1.

Derartige Druckmeßgeräte dienen unter anderem zum Messen des Differenzdrucks an Heizungsanlagen beispielsweise zwischen Vorlauf- und Rücklaufdrücken an Kreislaufpumpen oder des Druckabfalls an Filteranlagen, Lüftern und Verdichtern im Bereich der industriellen und sanitären Meßtechnik.

Aus dem Stand der Technik beispielsweise gemäß dem Deutschen Gebrauchsmuster G 81 30 130.8 ist ein Differenzdruckmanometer dieser Gattung bekannt.

Dieses Differenzdruckmanometer besteht aus einem zweiteiligen Druckgehäuse, an das ein Zeigerwerk mit Zeigernadel und Zifferblatt mittels einer zentralen Schraube angeschraubt ist. Zwischen den Gehäuseteilen ist eine Schlaffmembrane eingespannt. Die Membrane ist über ein Kupplungsteil mit einem am Gehäuse montierten Meßbereichsübertragungs- und Einstellwerk gekoppelt, das eine in Abhängigkeit von der Membranhubbewegung verdrehbare Meßwelle und einen mit dieser drehfest verbundenen Anlenkstift aufweist, der eine Verschwenkbewegung der Meßwelle auf das Zeigerwerk überträgt. Der Anlenkstift ist dabei auf der Meßwelle zur Einstellung des Übersetzungsverhältnisses in Axialrichtung der Meßwelle stufenlos verschiebbar. Am Zeigerwerk ist ferner eine Nullpunktkorrekturvorrichtung vorgesehen, mittels der das Zeigerwerk an einer Trägerplatine verdreht werden kann.

Die Schlaffmembrane, welche einen von den Gehäuseteilen definierten Hohlraum in zwei Druckkammern unterteilt, ist zur Hubbewegungsübertragung beidseits mit jeweils einer Metallstützplatte ausgesteift. In den beiden Druckkammern sind jeweils eine Anzahl von Spiralfedern auf einem Teilkreis der Metallstützplatten in einem vorbestimmten Winkelabstand zueinander derart angeordnet, daß sie sich jeweils zentrisch gegenüberliegen und die Schlaffmembrane bzw. die Metallstützplatten zwischen sich einspannen.

Durch die gewählte Zahl an Federn, welche als Meßbereichsfedern fungieren, läßt sich das Differenzdruckmanometer gemäß dem Stand der Technik auf dem gewünschten Druckmeßbereich vorab auslegen, wobei das Differenzdruckmanometer durch das Einstellwerk innerhalb des voreingestellten Druckmeßbereichs justiert werden kann, ohne daß hierzu die Meßbereichsfedern ausgetauscht werden müssen.

Das Differenzdruckmanometer gemäß dem Stand der Technik weist jedoch einige Nachteile bei dessen Fertigung insbesondere hinsichtlich der Fertigungskosten auf.

So müssen die verwendeten Federn bezüglich ihrer Federkennlinien exakt aufeinander abgestimmt sein, um eine optimale Lageposition der Membrane bzw. der Stützplatten innerhalb des Hohlraums zu erhalten und auch eine gleichmäßige Parallelverschiebung der Stützplatten ohne Kippbewegungen zu gewährleisten. Dies erfordert die Verwendung von hoch genauen Federn mit identischer Federsteifigkeit und Länge, was nur durch ein aufwendiges Auswahlverfahren erzielbar ist. Alternativ hierzu kann die Membrane nach deren Einbau und Abstützung mit den Federn aufwendig an jeder einzelnen Feder einjustiert werden. Des weiteren müssen bei der Verwendung der Federn auch Unterschiede bezüglich der Druck wirksamen Flächen an beiden Seiten der Membrane infolge der nur einseitigen Anordnung des Kupplungsteils berücksichtigt werden, um Einflüsse des Betriebsdrucks zu kompensieren und damit Meßfehler zu vermindern.

All diese auszugsweise genannten Maßnahmen zur Gewährleistung der Funktionsfähigkeit verteuern die Herstellung des bekannten Differenzdruckmanometers erheblich.

Die US 4,030,365 A1 betrifft ebenfalls ein gattungsgemäßes Druckmessgerät zur Bestimmung von Differenzdruck mit einem Membranaufbau, der einen in einem Gerätegehäuse definierten Hohlraum in zumindest zwei Kammern dichtend unterteilt und dessen in Abhängigkeit der Kammerdrücke erzeugte Hubbewegung über ein Kupplungsteil auf ein Zeigerwerk übertragbar ist. Darüber hinaus hat das bekannte Druckmessgerät eine Federanordnung, welche den Membranaufbau abstützt und mittels der der Messbereich des Druckmessgeräts voreingestellt wird. Diese Federanordnung ist zentrisch mit dem Membranaufbau wirkverbunden. Konkret ausgedrückt besteht die Federanordnung gemäß der US'365 aus einer Blattfeder, die über eine Spiralfeder mit der Membran gekoppelt ist, wobei die Spiralfeder auf einem Federsitz aufliegt, der zentrisch an der Membran angeordnet ist.

Die französische Druckschrift FR 2 323 993 betrifft ein anderes Differentialdruckmessgerät dieser Gattung mit einer Membran, die einen Zylinder in zwei Kammerhälften dichtend unterteilt. In dem Zylinder befinden sich zwei Kolben, die beidseits der Membran angeordnet sind und diese zwischen sich einspannen. Einer der Kolben ist mittels einer Feder vorgespannt, welche sich am Zylindergehäuse abstützt. Der andere Kolben wirkt auf eine Anzeigevorrichtung ein. Dabei ist dieser andere, auf die Anzeigevorrichtung einwirkende Kolben mittels einer Gegenfeder in Schieberichtung vorgespannt, die sich ebenfalls am Zylindergehäuse abstützt.

Schließlich ist aus der GB 183 795 ein Druckmessgerät dieser Gattung bekannt bestehend aus einem Gehäuse, welches eine Druckkammer ausbildet, die von einer zwischengefügten dichtenden Membran in zwei Kammerteile unterteilt ist. Eine zentrale Spiralfeder ist dabei über eine Stellschraube an dem Gehäuse abgestützt und spannt einen Kolben vor, der an der Membran an einem zentralen Mittenabschnitt fixiert ist. Auf der der Zentralfeder gegenüberliegenden Membranseite ist eine Nachlauffeder angeordnet, welche sich unmittelbar am Gehäuse abstützt. Gemäß diesem Stand der Technik dient die Zentralfeder dazu, den Druckbereich des Druckmessgeräts entsprechend der Stellung der Stellschraube vorzujustieren.

Angesichts dieser Sachlage ist es eine Aufgabe der Erfindung ein Druckmeßgerät zu schaffen, welches eine kostengünstige Fertigung ermöglicht und darüber hinaus exaktere Meßergebnisse liefert.

Diese Aufgabe wird erfindungsgemäß mittels eines Druckmeßgeräts mit den Merkmalen des Patentanspruchs 1 gelöst.

Gemäß dem Patentanspruch 1 hat das Druckmeßgerät zur Bestimmung von Überdruck, negativem Überdruck und Differenzdruck einen Membranaufbau bestehend aus einer Schlaffmembrane sowie zwei Stützplatten, der einen in einem Gerätegehäuse definierten Hohlraum in zumindest zwei Kammern dichtend unterteilt. In Abhängigkeit der herrschenden Kammerdrücke führt der Membranaufbau eine Hubbewegung aus, die über ein Kupplungsteil auf ein Zeigerwerk einer Analoganzeige übertragbar ist. Des weiteren hat das Druckmeßgerät gemäß der Erfindung eine auf den Membranaufbau einwirkende Federanordnung, mittels der ein Meßbereich des Druckmeßgeräts voreinstellbar ist. Diese Federanordnung umfaßt zumindest eine zentrisch mit dem Membranaufbau in Anlage bringbare Meßfeder. Die zentrische Anordnung der Meßbereichsfeder gewährleistet grundsätzlich eine parallele Hubbewegung des Membranaufbaus ohne überlagerte Kippbewegungen, hervorgerufen durch Federn mit unterschiedlichen Kennlinien, wie im Stand der Technik bemängelt und zwar auch für den Fall, daß in den einzelnen Geräten handelsübliche Federn mit durchschnittlich hoher Kennlinienstreuung verwendet werden.

Dies verbilligt die Herstellung des Geräts nicht nur durch verringerte Materialkosten, sondern auch durch einen reduzierten Montageaufwand, da nur die zentrale Federanordnung eingebaut, und entsprechend dem beabsichtigten Meßbereich voreingestellt werden muß.

Ferner sieht der Erfindungsgegenstand nach Anspruch 1 vor, daß die Federanordnung zumindest eine Nachlauffeder umfaßt, die axial zur Meßfeder auf der anderen Seite des Membranaufbaus angeordnet ist und den Membranaufbau zwischen sich und der Meßfeder einspannt. Die Nachlauffeder ist dabei an einem längs zu dieser bewegbaren Widerlager abgestützt, mittels dem die auf den Membranaufbau aufgebrachte Vorspannkraft der Nachlauffeder einstellbar ist. Durch Verstellen des Widerlagers kann die Vorspannkraft der Nachlauffeder auf den Membranaufbau entgegen der Meßfederkraft erhöht und verringert werden, um so den Membranaufbau zu verschieben, d.h. deren Position zu justieren.

Vorteilhaft hierbei ist es gemäß Anspruch 2, daß somit auch die Nullpunktjustierung des Druckmeßgeräts über den Membranaufbau und das Kupplungsteil durch das Widerlager der Nachlauffeder erfolgt, wofür die Nachlauffeder vorzugsweise eine geringere Härte aufweist als die Meßfeder. Dies verringert die Sensibilität der Justiervorrichtung, d.h. ein Betätigen des Widerlagers bewirkt eine nur geringe Erhöhung der Vorspannkraft der Nachlauffeder und damit eine nur geringe Positionsänderung der Membrananordnung, so daß deren Position exakt einstellbar ist.

Um die Funktionsfähigkeit weiter zu steigern sieht die Weiterbildung nach Anspruch 3 vor, daß das Kupplungsteil einen axial bewegbar gelagerten Schiebestift umfaßt, der mit dem Membranaufbau zentrisch in Anlage gehalten ist und derart, vorzugsweise nadelförmig, dimensioniert ist, daß die Anlagefläche zwischen dem Membranaufbau und dem Schiebestift quasi punktförmig ist. Durch diese konstruktive Maßnahme wird die Asymmetrie der wirksamen Flächen auf beiden Seiten der Membrananordnung nahezu aufgehoben und damit der Einfluß des Betriebsdrucks auf den Nullpunkt auf einen Wert kleiner als 2% gedrückt (bei kleinsten Meßbereichen). Hieraus resultierend können entsprechend die Betriebsdrucklevel höher sein.

Vorteilhafte Weiterbildungen sind Gegenstand der übrigen Unteransprüche.

Die Erfindung wird nachstehend anhand eines bevorzugten Ausführungsbeispiels unter Bezugnahme auf die begleitenden Zeichnungen näher erläutert.

Es zeigen:
Fig. 1 einen Seitenriß eines Differenzdruckmanometers gemäß einem bevorzugten Ausführungsbeispiels der Erfindung,
Fig. 2 eine Draufsicht des erfindungsgemäßen Differenzdruckmanometers.

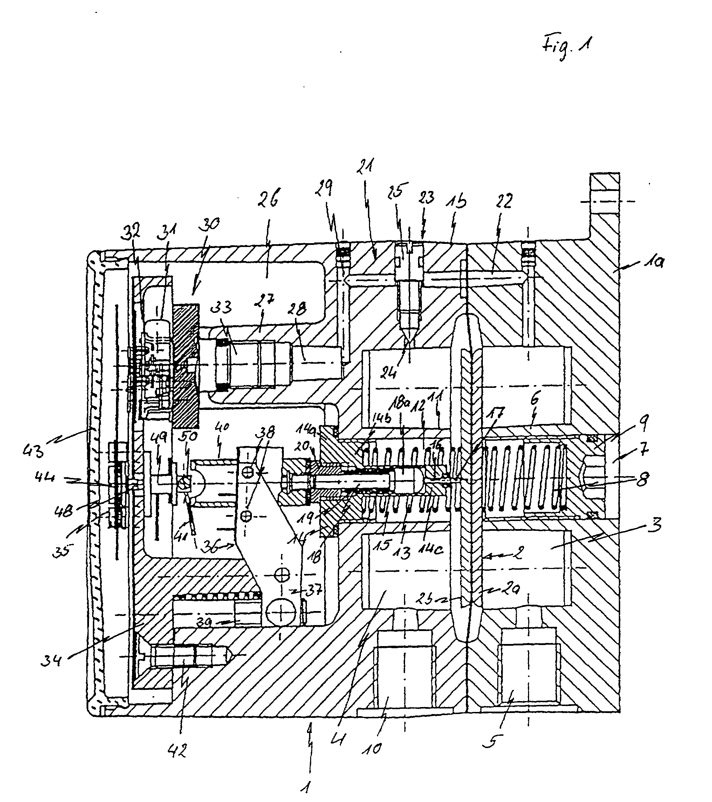

Wie in Fig. 1 dargestellt ist, hat der Differenzdruckmanometer gemäß der Erfindung ein Gehäuse 1 bestehend aus zwei zylindrischen Gehäuseteilen oder Hälften 1a, 1b, die stirnseitig miteinander mittels nicht gezeigter Schraubenbolzen verbunden sind. Die zwei Gehäuseteile 1a, 1b definieren im verschraubten Zustand gemeinsam einen Hohlraum, der von einer Schlaffmembrane 2 in zwei Hohraumkammern 3, 4 für einen Betriebs- und einen Gegendruck fluiddicht geteilt ist. Die Schlaffmambrane 2 wird hierfür bei der Montage des Gehäuses 1 zwischen die zwei Gehäuseteile 1a, 1b randseitig eingelegt und beim Festziehen der Schraubenbolzen dichtend eingeklemmt.

Die Membrane 2 selbst besteht aus einem Kunststoffmaterial, Gummi oder einem Leder und ist beidseits durch jeweils eine Abstützplatte 2a, 2b beispielsweise aus Metall versteift. Die zwei Abstützplatten 2a, 2b können durch Nieten oder Schrauben (nicht dargestellt) fest miteinander verbunden sein und dabei die Schlaffmembrane 2 ebenfalls zwischen sich einklemmen.

Die eine Gehäusehälfte 1a, welche die unter Betriebsdruck stehende Hohlraumkammer 3 (nachfolgend als Betriebsdruckkammer bezeichnet) ausbildet, ist mit einem Anschluß 5 für externe Drucksysteme versehen, der in die Betriebsdruckkammer 3 mündet. Ferner ragt von der Stirnwand dieser Gehäusehälfte 1a aus ein sockelförmiger Vorsprung 6 in die Betriebsdruckkammer 3 vor, der als zylindrischer Stumpf auf der Mittelachse der einen Gehäusehälfte 1a, d.h. zentrisch plaziert ist. In diesen Sockelvorsprung 6 ist von der äußeren Stirnseite der einen Gehäusehälfte 1a aus eine Durchgangsbohrung 7 eingebracht, in der ein Innengewinde ausgebildet ist. In der Durchgangsbohrung 7 ist ferner eine Spiralfeder 8 (nachfolgend als Nachlauffeder bezeichnet) untergebracht, die sich an einer Seite an der einen Stützplatte 2a der Schlaffmembrane 2 und an der anderen Seite an einer Einsatzschraube 9 abstützt, die in das Innengewinde der Durchgangsbohrung 7 als ein Widerlager der Nachlauffeder 8 eingedreht ist. Die Einsatzschraube 9 weist hierfür eine Federzentrierung beispielsweise eine stirnseitige Sackbohrung mit einem den Abmessungen der Nachlauffeder entsprechenden Durchmesser oder einen zapfenförmigen Vorsprung auf und dient ferner zur exakten Einstellung der auf die Schlaffmembrane 2 durch die Nachlauffeder 8 aufbringbaren Federvorspannkraft, wie nachfolgend noch im Einzelnen beschrieben wird.

Die andere Gehäusehälfte 1b, welche die unter dem Gegendruck stehende Hohlraumkammer 4 (nachfolgend als Gegendruckkammer bezeichnet) ausbildet, ist ebenfalls mit einem Anschluß 10 für externe Drucksysteme versehen, der in die Gegendruckkammer 4 mündet. Entsprechend der Ausbildung der vorstehend beschriebenen einen Gehäusehälfte 1a hat auch die andere Gehäusehälfte 1b einen in die Gegendruckkammer 4 zentrisch von deren Stirnwand aus vorragenden zylindrischen Sockelvorsprung 11, der somit zu dem sockelförmigen Vorsprung 6 der einen Gehäusehälfte 1a axial ausgerichtet und ebenfalls mit einer axial verlaufenden Durchgangsbohrung 12 versehen ist. In dieser Bohrung 12 ist eine Spiralfeder 13 untergebracht (nachfolgend als Meßfeder bezeichnet), welche sich an ihrem einen Ende axial zur Nachlauffeder 8 an der Membrane 2 bzw. der Abstützplatte 2b anlegt und sich an ihrem anderen Ende an einer Lagerungsbüchse 14 abstützt, die in die Durchgangsbohrung 12 dichtend eingesetzt ist. Hierfür ist die Durchgangsbohrung 12 mit einem Innengewinde versehen, in welches die Lagerungsbüchse 14, welche in einem mittelkaliebrigen Längsabbschnitt ein Außengewinde hat, eingeschraubt und mittels eines O-Rings abgedichtet ist.

Die Lagerungsbüchse 14 bildet an einer Stirnseite einen großkalibrigen Anschlagflansch 14a, der mit der Gehäusehälfte 1b bzw. deren Stirnwand in Anlage bringbar ist und damit die Einschraubtiefe der Büchse 14 in die Durchgangsbohrung 12 begrenzt. Die Büchse 14 hat im Anschluß an das Außengewinde bzw. den mittelkalibrigen Teil 14b des weiteren einen kleinkalibrigen Längsabschnitt 14c, der sich in die Durchgangsbohrung 12 erstreckt und von der spiralförmigen Meßfeder 13 umgeben ist. Die Lagerungsbüchse 14 ist mit einem axial sich erstreckenden Durchgangskanal 15 versehen, der an dem einen Endabschnitt der Büchse 14 im Bereich von deren großkalibrigem Anschlagflansch 14a mit einem Innengewinde versehen ist. Am gegenüberliegenden Ende ist der Durchgangskanal 15 durch eine Stirnwand der Lagerungsbüchse 14 begrenzt, in die mittig ein kleindurchmessriges Durchgangsloch 16 gebohrt ist. In diesem Durchgangsloch 16 ist ein Schiebestift 17 oder eine Nadel axial verschiebbar geführt und durch einen O-Ring oder Simmerring abgedichtet. Dieser Schiebestift 17 ist mit seinem inneren Ende an einem Bolzen 18 in Anlage, der ebenfalls axial verschiebbar in dem Durchgangskanal 15 der Lagerungsbüchse 14 untergebracht ist. Das äußere Ende des Schiebestifts 17 ragt aus dem Durchgangsloch 16 über das eine Ende der Lagerungsbüchse 14 in Richtung zur Membrane 2 vor und ist mit der einen Abstützplatte 2b der Membrane 2 in Anlage.

Der Bolzen 18 ist mit einem Bolzenkopf 18a versehen, der an dem Durchgangskanal 15 der Lagerungsbüchse 14 gleitend anliegt und der als ein Widerlager einer Vorspannfeder 19 dient, welche im den Bolzen 18 herum angeordnet ist. Diese Vorspannfeder 19 stützt sich an ihrem dem Bolzenkopf 18a gegenüberliegenden Ende an einer Stopfbuchse 20 ab, die in den Durchgangskanal 15 eingeschraubt ist und in der das andere Ende des Bolzens 18 gleitend geführt ist. Die Feder 19 spannt somit den Bolzen 18 über dessen Bolzenkopf 18a in Richtung zum Schiebestift 17 und damit den Schiebestift 17 zur Membrane 2 vor, wobei die Axialbewegung des Bolzens 18 in Richtung zur Membrane 2 durch die das Durchgangsloch 16 aufweisende Stirnwand der Lagerungsbuchse 14 begrenzt ist. Die Vorpannfeder 19 des Bolzens 18 hat gegenüber der Meßfeder 13 und der Nachlauffeder 8 eine wesentlich geringere Federkonstante bzw. Federsteifigkeit, wobei deren Vorspannkraft auf den Bolzen 18 gerade ausreicht, den Schiebestift 17 an der Abstützplatte 2b der Membrane 2 in Anlage zu halten.

Die Gesamtlänge der beiden sockelförmigen Vorsprünge 6, 11 ist derart bestimmt, daß sich in zusammengebautem Zustand der Gehäusehälften 1a, 1b zwischen beiden Vorsprüngen 6, 11 ein Spalt oder Abstand ergibt, dessen Spaltbreite größer ist, als die Dicke der Membrane 2 samt den beiden Abstützplatten 2a, 2b. Somit kann die Membrane 2 zwischen den sich gegenüberliegenden Sockelvorsprüngen 6, 11 hin- und herbewegt werden, wobei der Maximalhub der Membrane 2 durch die zwei Sockelvorsprünge 6, 11 festgelegt ist. Bei dieser Hubbewegung der Membrane 2 wird der Schiebestift 17 innerhalb des Durchgangslochs 16 in der Stirnwand der Lagerungsbuchse 14 axial bewegt, wobei diese Axialbewegung auf den in der Stopfbuchse 20 sowie in der Lagerungsbüchse 14 gleitend geführten Bolzen 18 übertragen wird.

Wie vorstehend bereits angedeutet wurde, ist der Schiebestift 17 nadelförmig bzw. mit einem sehr geringen Durchmesser von vorzugsweise maximal φ 1 mm ausgebildet, um eine quasi punktförmige Auflagerung an der Abstützplatte 2b der Membrane 2 zu schaffen. Hierdurch wird erreicht, daß sich die Druck wirksamen Flächen an beiden Seiten der Membrane 2 praktisch nicht unterscheiden bzw. nur um die vernachlässigbar kleine Auflagerfläche des Schiebestifts 17, wodurch die aus dem Stand der Technik her gewöhnte Asymmetrie der wirksamen Flächen nahezu aufgehoben wird und daher eine Anpassung der Nachlauffeder 8 und der Meßfeder 13 an eine solche Asymmetrie entfallen kann.

Bei der Auswahl der Nachlauffeder 8 und der Meßbereichsfeder 13 wird für die Letztere eine Spiralfeder mit erheblich höherer Federsteifigkeit bzw. Härte als die Nachlauffeder 8 verwendet. Darüber hinaus ist die Meßfeder 13 länger, als ihr Bauraum, d.h. die Durchgangsbohrung 12 in dem sockelförmigen Vorsprung 11, so daß die Membrane 2 in unjustiertem Zustand, wie in der Fig. 1 dargestellt ist, durch die Meßfeder 13 gegen den gegenüberliegenden sockelförmigen Vorsprung 6 gedrückt wird, in welchem die Nachlauffeder 8 untergebracht ist. Für ein Justieren der Membrane 2 wird lediglich die Nachlauffeder 8 über die Einsatzschraube 9 solange vorgespannt, bis deren Federkraft ausreicht, die Membrane 2 gegen die Vorspannkraft der Meßfeder 13 vom Sockelvorsprung 6 abzuheben und in Richtung ihrem Nullpunkt zu verschieben.

Der Grund, weshalb die Nachlauffeder 8 eine geringere Federsteifigkeit aufweist, als die Meßfeder 13 besteht darin, daß die Sensibilität der Federanordnung auf eine Axialverstellung der Einsatzschraube 9 verringert wird. In anderen Worten ausgedrückt, wird der Stellweg der Einsatzschraube 9 für geringste Bewegungen der Membrane 2 infolge der geringeren Härte der Nachlauffeder 8 gegenüber der Meßfeder 13 vergrößert und damit die Justierbarkeit verbessert.

Die zentrale bzw. zentrische Anordnung der Meßfeder 13 und der Nachlauffeder 8 gewährleistet nicht nur eine exakte Positionierung und auch Positionierbarkeit der Membrane 2 sondern verhindert auch ein Kippen der Membrane 2 während deren Hubbewegung aufgrund unterschiedlicher Federsteifigkeiten randseitig angeordneter Federn, wie dies im Stand der Technik der Fall ist. Dies eröffnet die Möglichkeit, handelsübliche und damit preiswerte Spiralfedern für die Federanordnung zu verwenden, deren Federsteifigkeiten Streuungen innerhalb einer bestimmten Toleranz aufweisen, welche jedoch durch die zentrale Anordnung der zwei gegenläufigen Federn 8, 13 auf einfache Weise ausgeglichen werden können.

An dieser Stelle sei darauf hingewiesen, daß die Voreinstellbarkeit des Meßgeräts durch die zentrische Federanordnung ebenfalls verbessert wird. Um das Meßgerät beispielsweise auf einen anderen Meßbereich voreinzustellen, müssen lediglich die zentrale Meßfeder 13 und ggf. die gegenüberliegende Nachlauffeder 8 ausgetauscht werden. Es hat sich dabei gezeigt, daß für Normmeßbereiche von bis ca. 6 bar das zentrale Federpaar grundsätzlich ausreichend ist. Bei den Meßbereichen von größer als 6 bar können wahlweise weitere Federn (nicht dargestellt) angeordnet werden. Hierfür sind die beiden Hohlraumkammern 3, 4 jeweils mit einer Anzahl, vorzugsweise sechs, von Aufnahmeabschnitten ausgebildet, in denen die Zusatzfedern optional plaziert werden können. Alternativ hierzu kann natürlich auch ein zentrales Federpaar mit entsprechend großer Federhärte verwendet werden.

Das Gehäuse 1 sowie der vorstehend beschriebene Schlaffmembranaufbau und Meßfederanordnung bilden die Meßzelle des erfindungsgemäßen Druckmeßgeräts.

Wie aus der Fig. 1 ferner zu ersehen ist, hat das Meßgerät, d.h. die Meßzelle ein integriertes Druckausgleichssystem 21, welches nachfolgend beschrieben wird.

Dieses System 21 umfaßt einen Verbindungskanal 22, der die beiden Hohlraumkammern 3, 4 unter Umgehung der Membrane 2 miteinander verbindet und der in den beiden Gehäusehälften 1a, 1b ausgebildet ist. In diesen Kanal 22 ist ein Druckausgleichsventil 23 bestehend aus einem Ventilsitz 24 und einem manuell verstellbaren Ventilkegel 25 ausgebildet. Der Ventilkegel 25 läßt sich dabei ähnlich einer Justierschraube verstellen, derart, daß er wahlweise auf dem Ventilsitz 24 aufsitzt, um den Verbindungskanal 22 zu sperren. Die Integration des Druckausgleichssystems 21 in das Gehäuse 1 des Meßgeräts macht eine externe Fluidverschaltung des Ventils mittels Rohren und/oder Schläuchen überflüssig und ist damit insgesamt kompakt und kostengünstig zumal es sich beim Zusammenbau des Gehäuses 1 gleich mit montiert.

An einem der vorstehend beschriebenen Meßeinrichtung abgewandten Abschnitt des Gehäuses 1 ist dieses, d.h. die Gehäusehälfte 1b zu einem einseitig offenen, zylindrischen Aufnahmeraum 26 ausgebildet. Dieser Aufnahmeraum 26 wird definiert durch die eine Stirnwand der Gehäusehälfte 1b, an welcher auch der Sokkelvorsprung 11 ausgebildet ist, sowie deren zylindrischer Mantelwand, die sich in Axialrichtung des Gehäuses 1 über eine bestimmte Länge in entgegengesetzte Richtung zum Sockelvorsprung 11 erstreckt und damit den zylindrischen oder besser gesagt, becherförmigen Aufnahmeraum 26 bildet. In diesen Aufnahmeraum 26 ragt an der Stirnwand der Gehäusehälfte 1b der Bolzen 18 aus der Stopfbuchse 20 vor. D.h., daß über den Aufnahmeraum 26 der Bolzen 18, sowie die Stopfbuchse 20, die Lagerungsbüchse 14 und nach deren Entfernung auch die Meßfeder 13 von außen zugänglich ist.

Von der vorstehend definierten Stirnwand der Gehäusehälfte 1b aus ragt ein Montagesockel 27 in den Aufnahmeraum 26 vor, der bezüglich der Mittelachse des Gehäuses 1 dezentral, d.h. außermittig plaziert ist. In diesen Montagesockel 27 ist eine Bohrung 28 eingebracht, die mit einem Innengewinde versehen ist. In die Bohrung 28 mündet ein Zweigkanal 29, der an den Verbindungskanal 22 zwischen dem Druckausgleichsventil 23 und der Betriebsdruckkammer 3 angeschlossen ist. In das Innengewinde ist ein Miniatur-Absolutdruckmeßgerät 30 zur Messung und Anzeige des Betriebsdrucks eingeschraubt. Dieses Absolutdruckmeßgerät 30 besteht dabei aus einer Absolutdruck-Meßzelle 31, einem Zeigerwerk samt Zifferblatt 32 sowie einem Sockelanschluß 33 und wird, wie in der Fig. 1 dargestellt ist, vollständig vom Aufnahmeraum 26 aufgenommen.

Der Aufnahmeraum 26 dient ferner zur Aufnahme einer Trägerplatine 34, die in den Aufnahmeraum 26 eingesteckt wird und die in der Fig. 1 schematisch dargestellt ist.

Demzufolge ist an der Trägerplatine 34 ein Zeigerwerk 35 mit Zeiger und Hauptzifferblatt montiert, in welchem gemäß diesem bevorzugten Ausführungsbeispiel ein Meßbereichübertragungs- und Einstellwerk integriert ist. Wie aus der Fig. 1 zu erkennen ist, besteht das Zeigerwerk 35 aus einer Zeigerwelle 44 mit Zahnritzel 48, welches mit einem kreissegmentartigen Zahrad (nicht gezeigt) in Kämmeingriff ist, welches wiederum mit einem schwenkbar an der Platine gelagerten Hebel einstückig ausgebildet ist. Dieser Hebel wird von einem senkrecht zu diesem sich erstreckenden sowie längs des Hebels manuell bewegbaren Stift (ebenfalls nicht gezeigt) betätigt, der drehfest, jedoch längsverschiebbar auf einer an der Platine über Montagesockel 49 gelagerten Rotationswelle 50 montiert ist. Der nicht gezeigte, weil hinter dem darstellten Montagesockel 49 sich befindende Stift sowie die Rotationswelle 50 bilden das Meßbereichübertragungs- und Einstellwerk. An die Rotationswelle 50 ist rechtwinklig zu dieser ein Eingangsglied 41 in Form eines Betätigungsstifts angelötet.

Alterntiv zu dieser Konstruktion kann das Meßbereichübertragungs- und Einstellwerk als eine externe Einheit dem Zeigerwerk vorgeschaltet und an der Trägerplatine 34 separat montiert sein.

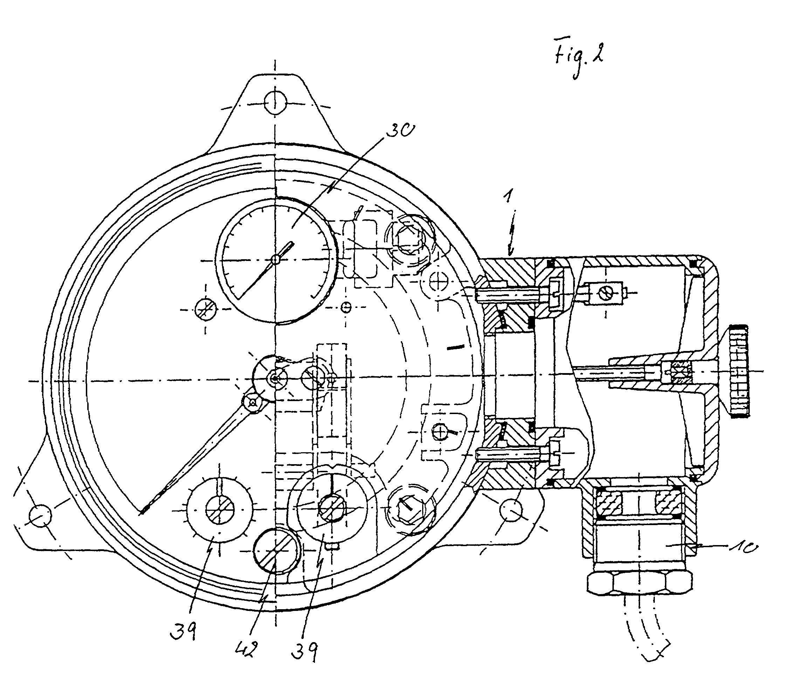

Des weiteren ist ausführungsgemäß eine elektrische Schaltkontakteinrichtung 36 an der Trägerplatine 34 montiert. Diese Schaltkontakteinrichtung 36 umfaßt zwei an der Trägerplatine 34 angelenkte Wippen 37 (nur eine Wippe ist in Fig. 1 dargestellt), an denen eine Anzahl von Schaltkontaktelementen 38 angeordnet sind. Die Wippen 37 sind mittels jeweils einer Stellschraube 39 betätigbar, um die Position der Schaltkontaktelemente 38 bezüglich eines Auslösebauteils 40 einzustellen, wobei die Stellschrauben 39 sowie das nachfolgende Justiergetriebe zur Betätigung der Wippe 36 in der Fig. 2 lediglich schematisch dargestellt sind. Das Auslösebauteil 40 ist in der Fig. 1 als ein Hohlzylinder dargestellt, der an dem Bolzen 18 der Meßzellefest montiert ist und gleichzeitig zur Betätigung der Zeigerwerks bzw. des Meßbereichübertragungs- und Einstellwerks 35 über das Eingangsglied 41 dient.

Das Hauptzifferblatt weist an einer zur Zeigernadel, bzw. Zeigerwelle 44 dezentralen Stelle eine im wesentlichen kreisformige Ausnehmung auf, deren Position und Durchmesser so gewählt sind, daß in montiertem Zustand der Trägerplatine 34 das dahinter sich befindliche Absolutdruckmeßgerät 30 von vorn sichtbar und ablesbar ist.

Zur Montage des Meßgeräts wird folgendes ausgeführt:

Für die Montage der Meßzelle wird zwischen die beiden Gehäusehälften 1a, 1b der vorgefertigte Membraneaufbau, d.h. die Schlaffmembrane 2 samt den beiden Abstützplatten 2a, 2b eingesetzt, worauf die Gehäusehälften 1a, 1b mittels der nicht gezeigten Schraubenbolzen aneinander fixiert werden. Hierbei wird die Membrane 2 fluiddicht zwischen den Gehäusehälften 1a, 1b eingeklemmt und bildet somit die Betriebsdruck- und Gegendruckkammer 3, 4 aus.

Anschließend wird die Federanordnung montiert, indem die Meßfeder 13 über den noch offenen Aufnahmeraum 26 in die Durchgangsbohrung 12 eingesetzt wird. Hierauf wird die Lagerungsbüchse 14, in der bereits der Bolzen 18 samt dessen Vorspannfeder 19, der Schiebestift 17 sowie die Stopfbuchse 20 installiert sind, in die Durchgangsbohrung 12 dichtend eingeschraubt, wobei die Meßfeder 13 durch die Lagerungsbüchse 14 gegen die Membrane 2 bzw. die eine Abstützplatte 2b gedrückt wird und diese auf den sockelförmigen Vorspruch 6 schiebt. Gleichzeitig kommt der Schiebestift 17 mit der gleichen Abstützplatte 2b in Anlage, in der er durch die Vorspannfeder 19 gehalten wird. An das freie d.h. dem Schiebestift 17 abgewandten Ende des Bolzens 18, welches aus der Stopfbuchse 20 in den Aufnahmeraum 26 ragt, wird schließlich der Hohlzylinder 40 angeschlossen, derart, daß er zusammen mit dem Bolzen 18 axial bewegbar gehalten ist.

In dem folgenden Montageschritt wird die Nachlauffeder 8 in die Durchgangsbohrung 7 am gegenüberliegenden Vorsprung 8 der Gehäusehälfte 1a eingesetzt und durch Einschrauben der Einsatzschraube 9 gegen die Membrane 2, bzw. die andere Abstützplatte 2a stufenlos vorgespannt, solange, bis sich die Membrane 2 entgegen der Meßfeder 13 von dem Vorsprung 6 abhebt und sich in der Nullposition plaziert.

Zur Montage der Anzeigeeinheit wird zuerst das Absolutdruckmeßgerät 30 in den Anschluß- bzw. Montagesockel 27 innerhalb des Aufnahmeraums 26 dichtend einschraubt, wobei das Absolutdruckmeßgerät 30 über den Verbindungkanal 22, welcher sich beim Zusammensetzen der beiden Gehäusehälften 1a, 1b quasi selbständig montiert, mit dem Betriebsdruck in der Betriebsdruckkammer 3 beaufschlagbar ist. Hierauf wird die vormontierte, modulare Trägerplatine 34 mit dem Zeigerwerk 35, dem Meßbereichübertragungs- und Einstellwerk, sowie der elektronischen Schaltkontakteinrichtung 36 in den Aufnahmeraum 26 eingesteckt, derart, daß das Absolutdruckmeßgerät 30 durch die Ausnehmung in dem Hauptzifferblatt sichtbar ist. Hierbei kommt das schematisch in Fig. 1 gezeigte Eingangsglied 41 des Zeiger- bzw. Meßbereichübertragungs- und Einstellwerks 35 mit dem als Hohlzylinder 40 gemäß diesem Ausführungsbeispiel ausgeführten Betätigungselement in Eingriff, vorliegend in Anlage, um Hubbewegungen der Membrane 2 über den Schiebestift 17, den Bolzen 18, sowie den Hohlzylinder 40 auf das Zeigerwerk 35 zu übertragen. Zur Fixierung der Trägerplatine 34 in dem Aufnahmeraum 26 dient eine Fixierschraube 42, die im linken unteren Bereich der Fig. 1 als Senkkopfschraube dargestellt ist.

Die Montage wird beendet durch Aufsetzen eines Sichtglases 43 auf die offene Seite des Aufnahmeraums 26, wodurch dieser nach außen verschlossen wird und damit die Trägerplatine 34 schützend abdeckt.

Die Erfindung betrifft ein Differenzdruckmeßgerät mit einer Membrane auf die zumindest eine zentrisch angeordnete Meßfeder zur Voreinstellung des Meßbereichs einwirkt. Zusätzlich ist zumindest eine Nachlauffeder vorgesehen, welche der Meßfeder entgegenwirkt und die an einem manuell verstellbaren Widerlager abgestützt ist. Durch Verstellen des Widerlagers, läßt sich die Konstruktionslage der Membrane verändern und damit der Nullpunkt des Meßgeräts justieren. Die zentrale Anordnung der Meßfeder sowie der Nachlauffeder erlaubt die Verwendung von handelsüblichen Federelementen mit durchschnittlicher Federkennlinienstreuung.

## Patentansprüche

1. Druckmessgerät zur Bestimmung von Überdruck, Unterdruck und Differenzdruck mit
einem Membranaufbau (2, 2a, 2b), der einen in einem Gerätegehäuse (1) definierten Hohlraum in zumindest zwei Kammern (3, 4) dichtend unterteilt und dessen in Abhängigkeit der Kammerdrücke erzeugte Hubbewegung über ein Kupplungsteil (17, 18, 40) auf ein Zeigerwerk (35) einer Analoganzeige übertragbar ist und mit
einer auf den Membranaufbau (2, 2a, 2b) einwirkenden Federanordnung, mittels der ein Messbereich des Druckmessgeräts voreinstellbar ist, wobei die Federanordnung zumindest eine zentrisch mit dem Membranaufbau (2, 2a, 2b) in Anlage bringbare Messfeder (13) und zumindest eine Nachlauffeder (8) umfasst, die axial zur Messfeder (13) auf der anderen Seite des Membranaufbaus (2, 2a, 2b) angeordnet ist und den Membranaufbau (2, 2a, 2b) zwischen sich und der Messfeder (13) einspannt,
**dadurch gekennzeichnet, dass**
sich die Nachlauffeder (8) an einem längs zu dieser bewegbaren Widerlager (9) abstützt, mittels dem die auf den Membranaufbau (2, 2a, 2b) aufgebrachte Vorspannkraft der Nachlauffeder (8) einstellbar ist.

2. Druckmeßgerät nach Anspruch 1, **dadurch gekennzeichnet, dass**
die Nullpunktjustierung des Druckmeßgeräts über den Membraneaufbau (2, 2a, 2b) und die Nachlauffeder (8) durch das Widerlager (9) der Nachlauffeder (8) erfolgt.

3. Druckmeßgerät nach einem der vorstehenden Ansprüche,
**dadurch gekennzeichnet, dass**
das Kupplungsteil (17, 18, 40) einen axial bewegbar gelagerten Schiebestift (17) umfasst, der mit.dem Membraneaufbau (2, 2, 2b) zentrisch in Anlage gehalten ist und derart, vorzugsweise nadelförmig, dimensioniert ist, dass die Anlagefläche zwischen dem Membraneaufbau (2, 2a, 2b) und dem Schiebestift (17) quasi punktförmig ist.

4. Druckmessgerät nach einem der vorstehenden Ansprüche,
**gekennzeichnet durch**
eine Trägerplatine (34), an der das Zeigerwerk (35) samt zugehörigem Zeiger und Zifferblatt, ein Einstellwerk zur Einstellung des Übersetzungsverhältnisses des Zeigerwerks (35) sowie wahlweise eine Schaltkontakteinrichtung (36) zu einer modularen Baugruppe vormontiert sind, wobei das Zeigerwerk (35) ein Eingangsglied (41) hat, welches bei der Montage der Baugruppe an dem Gerätegehäuse (1) selbsttätig mit dem Kupplungsteil (17, 18, 40) in Wirkeingriff kommt.

5. Druckmessgerät nach Anspruch 4,
**dadurch gekennzeichnet, dass**
das Gerätegehäuse (1) einen einseitig offenen Aufnahmeraum (26) ausbildet, in den die Trägerplatine (34) für die Montage einsteckbar ist.

## Claims

1. Pressure gauge for determining pressures above and below atmospheric pressure, and differential pressures, with
a diaphragm assembly (2, 2a, 2b) which in a sealed fashion divides a cavity defined inside a casing (1) into at least two chambers (3, 4) and whose stroke produced as a function of the chamber pressures is transmissible by a coupling (17, 18, 40) to a dial train (35) of an analogue indicator and with a spring arrangement, by means of which a measuring range of the pressure gauge can be preset, acting on the diaphragm assembly (2, 2a, 2b), the spring arrangement comprising at least one gauge spring (13) which can be brought to bear centrally on the diaphragm assembly (2, 2a, 2b) and at least one follower spring (8) which is arranged axially with respect to the gauge spring (13) on the other side of the diaphragm assembly (2, 2a, 2b) and clamps the diaphragm assembly (2, 2a, 2b) between itself and the gauge spring (13),
**characterized in that**
the follower spring (8) takes its bearing on a buttress (9) which is movable longitudinally with respect to the follower spring (9) and by means of which the initial force applied by the follower spring (8) to the diaphragm assembly (2, 2a, 2b) is adjustable.

2. Pressure gauge according to Claim 1, **characterized in that**
the zero point adjustment of the pressure gauge is effected via the diaphragm assembly (2, 2a, 2b) and follower spring (8) by means of the buttress (9) of the follower spring (8).

3. Pressure gauge according to either of the preceding claims,
**characterized in that**
the coupling (17, 18, 40) comprises an axially movably mounted slide pin (17) which is held centrally in contact with the diaphragm assembly (2, 2[a], 2b) and is dimensioned, preferably in the form of a needle, so that the bearing surface between the diaphragm assembly (2, 2a, 2b) and the slide pin (17) is virtually a point.

4. Pressure gauge according to any one of the preceding claims,
**characterized by**
a bottom plate (34) on which the dial train (35) together with pointer and dial, a setting mechanism for setting the gear ratio of the dial train (35) and, optionally, a switching contact device (36) are preassembled as a modular subassembly, wherein the dial train (35) has an input element (41) which automatically comes into active engagement with the coupling (17, 18, 40) when the subassembly is mounted on the casing (1).

5. Pressure gauge according to Claim 4,
**characterized in that**
the casing (1) forms an accommodation space (26), open at one end, into which the bottom plate (34) is insertable for mounting.

## Revendications

1. Appareil de mesure de pression pour déterminer une surpression, une dépression et une pression différentielle, comportant
un dispositif à membrane (2, 2a, 2b) qui divise de manière étanche une cavité, définie dans un boîtier (1) de l'appareil, en au moins deux chambres (3, 4) et dont le mouvement de levage, produit en fonction de la pression des chambres, peut être transmis, par un élément d'accouplement (17, 18, 40), à un indicateur (35) d'un affichage analogique, et comportant un agencement à ressorts, agissant sur le dispositif à membrane (2, 2a, 2b), au moyen duquel on peut prérégler une plage de mesure de l'appareil de mesure de pression, l'agencement à ressorts comprenant au moins un ressort de mesure (13) qui peut être amené en contact avec le dispositif à membrane (2, 2a, 2b) et au moins un ressort de rappel (8) qui est disposé axialement par rapport au ressort de mesure (13), sur l'autre côté du dispositif à membrane (2, 2a, 2b) et qui serre le dispositif à membrane (2, 2a, 2b) entre lui-même et le ressort de mesure (13),
**caractérisé en ce que** le ressort de rappel (8) prend appui contre une contre-butée (9) déplaçable le long de celui-ci, au moyen de laquelle la force de précontrainte du ressort de rappel (8), appliquée sur le dispositif à membrane (2, 2a, 2b), est réglable.

2. Appareil de mesure de pression selon la revendication 1, **caractérisé en ce que** l'ajustage du point zéro de l'appareil de mesure de pression s'effectue par la contre-butée (9) du ressort de rappel (8), par l'intermédiaire du dispositif à membrane (2, 2a, 2b) et du ressort de rappel (8).

3. Appareil de mesure de pression selon l'une des revendications précédentes, **caractérisé en ce que** l'élément d'accouplement (17, 18, 40) comprend un doigt coulissant (17) monté déplaçable axialement, qui est maintenu en contact centré avec le dispositif à membrane (2, 2a, 2b) et qui est dimensionné, de préférence en forme d'aiguille, de la manière que la surface de contact entre le dispositif à membrane (2, 2a, 2b) et le doigt coulissant (17) soit pratiquement de forme ponctuelle.

4. Appareil de mesure de pression selon l'une des revendications précédentes, **caractérisé par** une platine de support (34) sur laquelle sont prémontés, sous la forme d'un ensemble modulaire, l'indicateur (35) avec aiguille correspondante et cadran, un mécanisme de réglage pour le réglage du rapport de transmission de l'indicateur (35) ainsi qu'au choix un dispositif à contact de commutation (36), l'indicateur (35) possédant un organe d'entrée (41) qui vient automatiquement en engagement actif avec l'élément d'accouplement (17, 18, 40), lorsque l'on monte l'ensemble sur le boîtier (1) de l'appareil.

5. Appareil de mesure de pression selon la revendication 4, **caractérisé en ce que** le boîtier (1) de l'appareil forme un logement (26) ouvert d'un côté dans lequel on peut enficher la platine de support (34) pour le montage.
